Europäisches Patentamt

European Patent Office

Office européen des brevets

(19)

(11) Publication number: **0 097 428**
**A2**

## (12) EUROPEAN PATENT APPLICATION

(21) Application number: **83302920.0**

(22) Date of filing: **20.05.83**

(51) Int. Cl.³: **B 23 B 51/04**
**//B23P15/30**

(30) Priority: 21.05.82 GB 8214880

(43) Date of publication of application:
**04.01.84 Bulletin 84/1**

(84) Designated Contracting States:
**DE FR GB IT**

(71) Applicant: **BIJUR LUBRICATING CORPORATION**
**112 Bauer Drive**
**Oakland New Jersey 07436(US)**

(72) Inventor: **Hammond, David Charles**
**Duart Bulstrode Lane**
**Felden Hemel Hempstead Herts(GB)**

(74) Representative: **Williams, John Francis et al,**
**J.F. Williams & Co 34 Tavistock Street**
**London WC2E 7PB(GB)**

(54) Drill bit and manufacture thereof.

(57) A deep hole drill bit comprises a rod or shank (1), a cutting tip (3) attached to one end thereof and a holder (2) attached to the other end.

In order to improve the drill bit, the rod or shank (1) is solid, has a lubricant bore (8) throughout its length and has a longitudinal swarf clearance flute (4) of at least 180° and the cutting tip (3) has an aperture (7) connected to the lubricant bore (8) for outflow of lubricant.

The invention also includes suitable methods of manufacturing such a drill bit.

EP 0 097 428 A2

FIG.2

1

## DRILL BIT AND MANUFACTURE THEREOF

This invention relates to a drill bit and particularly to a drill bit usable for deep hole drilling. The drill bit of the present invention is particularly suitable for use with tough material such as high temperature stainless steels inconels and aircraft specification steels. It also relates to a method of making such a drill bit.

Up to now there have been significant problems in drilling holes which are of depths greater than five times the hole diameter. Previously for these types of holes, it has been necessary to use a gun drillbit. A gun drill usually consists of a hollow steel tube with an attached tungsten carbide cutting head. A coolant/lubricant is supplied under high pressure (up to 1000psi or 70kg/cm$^2$) through the centre of the drill to the single edge of the cutting tip and, with this high pressure, the swarf is formed with a chip formation and is swept back by way of a swarf clearance flute on the outside of the drill. While the drilling action of these drills is good and provides a high surface finish to the bore, gun drills cannot be used with ordinary lathes or drilling machines since special machinery is required. In particular there is the necssity of providing equipment for supplying coolant under high pressure and the necessity of totally encolsing the machining area because of the pressure

2

with which the swarf is washed out. Furthermore the cost of producing the gun drill bit itself is high due to the relative difficulty in producing the kidney shaped configuration of the tip and tube of the gun drill. In our prior Patent Application No. 8128878, there is proposed the provision of a deep hole drill bit which comprise a hollow one-piece tube with a cutting tip attached to one end, the cutting tip being apertured to provide an outlet from the one piece hollow tube and having a swarf clearance flute of $180^c$ or more.

Such a tube drill bit has proved very successful in normal application for this type of drill but considerable difficulties is experienced in cases where the material to be drilled is particularly tough, such as high temperature stainless steels, inconels, or aircraft specification steels. With these considerably tougher materials, problems arise with regard to wear of the drill and with regard to the strength of the drill bit itself. Thus the previously proposed drill has a certain flexibility which when it is used to drill the particularly tough material, will set up a vibration in the drill bit causing significant wear of the cutting edges of the drill itself and also there is the possibility of breaking the drill due to the forces which are required to be applied thereto in order to drill the tougher material.

The present invention seeks to provide a deep hole drilling bit in which some or all of the above mentioned disadvantages are of the obviated or substantially reduced.

According to a first aspect of the invention, there is provided a deephole drill bit comprising a rod or shank a cutting tip attached to one end thereof and a holder attached to the other end characterised in that the rod or shank is solid, has a lubricant bore throughout its length and has a longitudinal swarf clearance flute of at least 180° and the cutting tip has an aperture connected to the lubricant bore for outflow of lubricant.

According to a second aspect of the invention, there is provided a method of manufacturing a deephole drill bit characterised in that the method comprises providing a generally sector sectioned rod or shank of solid material having a sector angle of not more than 180°, providing a bore down the shank or rod from one end to the other to provide a lubrication channel, attaching a cutting tip to one end of the shank or rod and a holder to the other end.

The invention will now be described in greater detail, by way of example with reference to the drawings in which:-

Figure 1 is a side view or a first form of drill bit in accordance with the inventon.

Figure 2 is a sectional view showing the formation of the interior of the drill bit in Figure 1;

Figure 3 is a view similar to Figure 2, but showing the drill bit with a different arragement for fastening it to the holder;

Figure 4 is a sectional view taken on the line IV-IV of Figure 2 or Figure 3; and

Figure 5 is a sectional view taken along the line V-V of Figure 3.

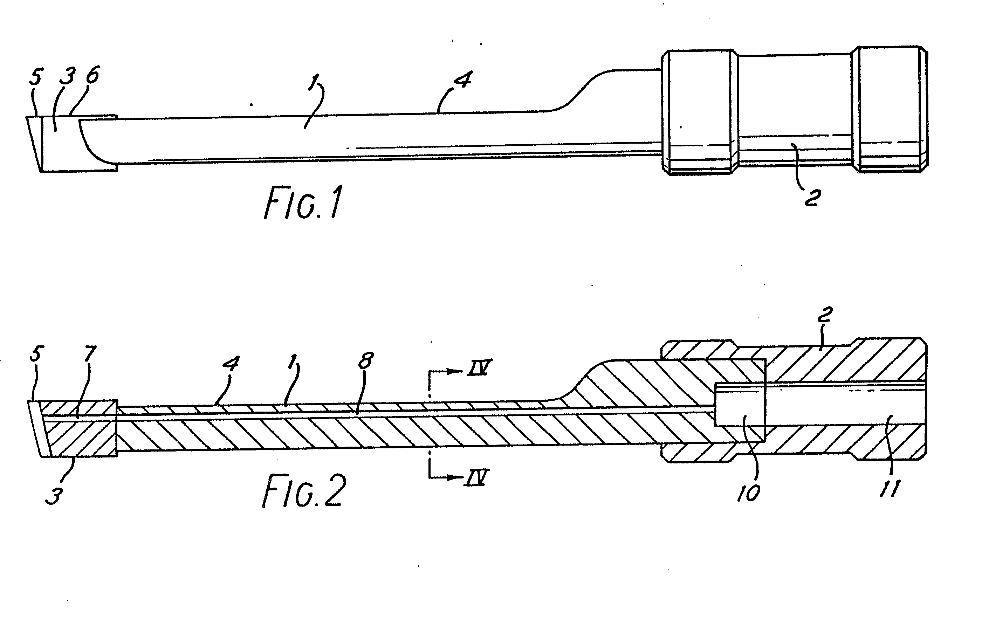

Referring firstly to Figures 1, 2 and 4 it will be seen that the deep hole drilling bit comprises a rod-like member extending from a holder 2 to a cutting tip 3 suitably fastened t the end of the rod 1. The rod has a D-shaped configuration so that the flat side 4 of the rod 1 extends approximately along the axis of the drill bit and of the bore which is to be made, the cutting edge 5 in the face 6 of the cutting element lying exactly on the centre line of the diameter. Typically the cutting tip 3 is provided with burnishing pads. As can be seen from the sectional view in Figure 2, the cutting tip 3 is provided with a longitudinal bore 7 which forms an extension of a longitudinal bore 8 in the rod 1. It will be also seen that the D-shaped portion of the rod 1 extends to adjacent the holder 2, at which point it becomes circular, the longitudinal bore 8 in the rod being enlarged at its end within the bore at 10 so that it provides a connection with a central bore 11 in the holder. This enlargement may be omitted if the dimensions of the bore 8 and bore 11 allow. This channel 11, 10, 8, 7, which extends from the end of the holder 2, to the drill bit 3 allows cooling and lubricating fluid to flow to the drill bit, usually in the form of a mist.

In manufacturing the drill bit, the rod 1 is suitably produced from a circular cross-section tooled or mild steel rod. The exact cross-section desired, namely the D-shaped portion is produced in this rod, by a milling operation and the longitudinal bore 8 together with the enlarged portion 10 is bored in the rod 1. Because of the D-shaped section, the bore 8 will be somewhat off

5

centre and since this has to mate with the bore 11 within the holder, the bore 8 is as mentioned widened out at 10. The tip 3 and the holder 2 are preferably attached to the rod by braising.

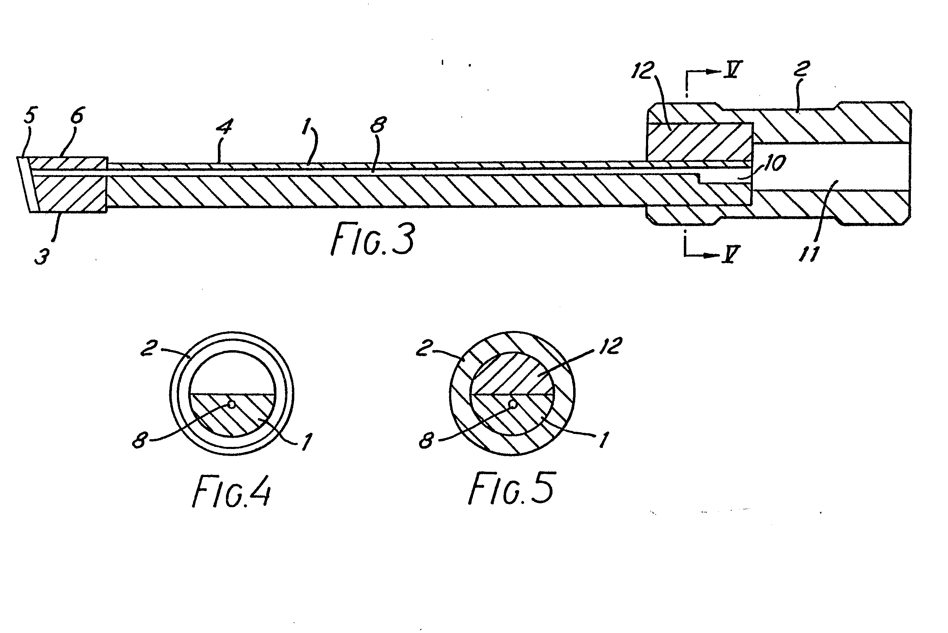

This construction is suitable for the production of small numbers of drill bits but is uneconomical for the production of large runs. For this reason, a further embodiment of the invention is shown in Figures 3 and 5. In this case, the rod 1, instead of being initially circular is produced by an extrusion operation in the desired D-shape and is provided at the same time with the longitudinal bore 8 required for the lubrication. In order to assemble the extruded rod, the holder has a circular recess as in the case of Figure 2 and one half of the recess is filled with the D-shaped rod 1 while the other half is filled by an insert 12 formed from a similar shaped rod, preferably without the longitudinal aperture. It is to be noted that, before assembly, the bore 8 is provided with its enlarged end portion 10, as necessary. The drill bit tip 3 may be attached in the same way as previously.

It will be appreciated that other materials may be used for the drill bit such as stainless steel and other suitable materials. Because of their construction which is inherently rigid, the drill bits are less subject to vibration and thus to increased wear or breakage than is the drill bit described in our copending application. As has been noted, this is particularly important in the field of boring of tough materials since a much greater stress is placed on a drill bit used for this purpose.

The cooling lubricant mist may suitably comprise soluble drilling oil which is mixed with water. It is preferable to use a mist device which, for example, is connected to the passage 11 provided in the holder. This mist may comprise a mist of 10 parts of water to one part of soluble extreme pressure oil and may be used at any pressures from about 15psi ($1kg/cm^2$) up to for example 80psi ($5.5kg/cm^2$) though higher pressures may be used. It has been found that between 40 and 50psi (3 and $3.5kg/cm^2$) gives optimum results. Normal diameters of the drill would be in the range of 3mm to 35mm.

The drill bit described above can be used on a normal lathe, for example, a single spindle automatic lathe. In this lathe the workpiece is preferably rotated while the drill bit remains stationary since this provides for an easier supply of the necessary oil mist. For the purposes of connection of the drill bit, a special tool holder is provided having a suitable passage to supply the lubricant/coolant mist to the passage way within the drill bit. Suitably a chip spray deflector is provided for receiving and deflecting the returned lubricant/coolant and particularly the swarf generated by the drilling operation.

7

## Claims

1.  A deep hole drill bit comprising a rod or shank (1) a cutting tip (3) attached to one end thereof and a holder (2) attached to the other end characterised in that the rod or shank (1) is solid, has a lubricant bore (8) throughout its length and has a longitudinal swarf clearance flute (4) of at least 180° and the cutting tip (3) has an aperture (7) connected to the lubricant bore (8) for outflow of lubricant.

2.  A drill bit as claimed in claim 1, wherein the holder (2) has a recess for receiving the end of the rod or shank (1) and a central bore (11) connected to the lubricant bore (8).

3.  A drill bit as claimed in claim 1 or 2 wherein the rod or shank (1) has a portion of circular section adjacent to the holder (2), the central bore (11) being of larger diameter than the lubricant bore (8) and the lubricant bore (8) being enlarged adjacent the central bore (11) to mate therewith.

4.  A drill bit as claimed in claim 1 or 2, wherein the rod or shank (1) has the same cross section throughout its length, while the recess in the holder (2) is of circular cross section, an insert (12) being provided for filling that part of the recess not filled by the rod or shank (1).

8

5. A method of manufacturing a deep hole drill bit characterised in that the method comprises providing a generally sector sectioned rod or shank (1) of solid material having a sector angle of not more than 180°, providing a bore (8) down the shank or rod (1) from one end to the other to provide a lubrication channel, attaching a cutting tip (3) to one end of the shank or rod (1) and a holder (2) to the other end.

6. A method as claimed in claim 5, wherein the rod or shank (1) is produced by milling from a solid circular section rod and the lubrication channel is provided by boring a bore (8) through the shank or rod.

7. A method as claimed in claim 6 wherein the major part of·· the rod or shank (1) is milled leaving a circular sectioned portion at the end adjacent the holder (2) and a recess is formed in the holder (2) to receive the circular sectioned portion of the rod or shank (1).

8. A method as claimed in claim 5 wherein the rod or shank (1) is extruded with its lubrication bore (8).

9. A method as claimed in claim 8 wherein a circular sectioned recess is formed in the holder (2) into which the end of rod or shank (1) is inserted and a filler element (12) having a shape complementary to the rod or shank (1) is also inserted into the recess for filling that part of the recess not occupied by the rod or shank (1)

9

10.  A method as claimed in any one of claims 5 to 9, wherein a central bore (11) is formed in the holder for communication with the lubricating bore (8), the central bore (11) being of larger diameter than the lubricating bore (8) and the lubricating bore (8) being bored  out to form a larger diameter portion (10) for communication with the central bore (11).

11.  A method as claimed in claim 10, wherein the larger diameter portion bore (10) has its axis offset from the axis of the lubricating bore (8).

FIG.1

FIG.2

0097428

Fig.3

Fig.4

Fig.5

0097428